(19) Europäisches Patentamt / European Patent Office / Office européen des brevets

(11) **EP 2 488 596 B1**

(12) **FASCICULE DE BREVET EUROPEEN**

(45) Date de publication et mention de la délivrance du brevet:
**03.10.2018 Bulletin 2018/40**

(21) Numéro de dépôt: **10785105.7**

(22) Date de dépôt: **13.10.2010**

(51) Int Cl.:
**D04H 1/4209** (2012.01)    **D04H 1/4218** (2012.01)
**D04H 1/587** (2012.01)    **E04B 1/76** (2006.01)
**C09J 103/02** (2006.01)    **C03C 25/26** (2018.01)

(86) Numéro de dépôt international:
**PCT/FR2010/052164**

(87) Numéro de publication internationale:
**WO 2011/045531 (21.04.2011 Gazette 2011/16)**

(54) **COMPOSITION D'ENCOLLAGE POUR LAINE MINERALE COMPRENANT UN SUCRE REDUCTEUR ET UN SEL METALLIQUE D'ACIDE INORGANIQUE, ET PRODUITS ISOLANTS OBTENUS**

HAFTMITTELZUSAMMENSETZUNG FÜR MINERALWOLLE MIT EINEM REDUZIERENDEN ZUCKER UND EINEM METALLSALZ EINER ANORGANISCHEN SÄURE SOWIE IN DIESEM VERFAHREN GEWONNENE ISOLATIONSPRODUKTE

ADHESIVE COMPOSITION FOR MINERAL WOOL INCLUDING A REDUCING SUGAR AND A METAL SALT OF AN INORGANIC ACID, AND INSULATING PRODUCTS THUS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.10.2009 FR 0957144**

(43) Date de publication de la demande:
**22.08.2012 Bulletin 2012/34**

(73) Titulaire: **Saint-Gobain Isover**
**92400 Courbevoie (FR)**

(72) Inventeurs:
- **JAFFRENNOU, Boris**
  **F-75019 Paris (FR)**
- **OBERT, Edouard**
  **F-60580 Coye La Foret (FR)**
- **PONS Y MOLL, Olivier**
  **F-60600 Agnetz (FR)**
- **LOHOU, Stéphane**
  **F-75019 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
EP-A1- 1 382 642    EP-A1- 2 223 941
WO-A1-96/26164    WO-A1-2008/089850
WO-A1-2009/019232    WO-A2-2009/080938
DE-A1- 4 222 444    DE-A1-102004 011 231
FR-A1- 2 576 603    GB-A- 116 620
GB-A- 421 456    GB-A- 191 201 937
US-A- 2 544 714    US-A- 2 657 163
US-A- 4 369 173    US-A1- 2005 214 519

**Description**

La présente invention se rapporte au domaine des produits d'isolation, thermiques et/ou acoustiques, à base de laine minérale, notamment de verre ou de roche, et d'un liant exempt de formaldéhyde.

L'invention concerne plus particulièrement une composition d'encollage apte à réticuler pour former ledit liant, qui renferme au moins un sucre réducteur et au moins un sel métallique d'acide inorganique, le procédé de fabrication de produits d'isolation thermiques et/ou acoustiques et les produits d'isolation qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées vers un organe récepteur pour former une nappe de fibres (ou laine minérale).

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, afin d'éviter la formation de chaînes longues peu hydrosolubles qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues.

Une première solution se fonde sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

D'autres compositions d'encollage ont été proposées qui comprennent un polymère polycarboxylique, un polyol et un catalyseur, lequel catalyseur pouvant être un composé contenant du phosphore (US 5 318 990, US 5 661 213, US 6 331 350, US 2003/0008978), un fluoroborate (US 5 977 232) ou bien un cyanamide, un dicyanamide ou une cyanoguanidine (US 5 932 689).

Les compositions d'encollage à base d'un polymère polycarboxylique et d'un polyol peuvent en outre comprendre un tensioactif cationique, amphotère ou non ionique (US 2002/0188055), un agent de couplage de type silane (US 2004/0002567) ou une dextrine en tant que co-liant (US 2005/0215153).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Une deuxième solution de remplacement des résols se fonde sur l'association d'un saccharide et d'un acide polycarboxylique.

Dans US 5 895 804, il est décrit une composition adhésive à base de polysaccharides thermoréticulables pouvant être utilisée en tant qu'encollage pour de la laine minérale. La composition renferme un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, la composition d'encollage comprend un monosaccharide et/ou un polysaccharide et un acide organique polycarboxylique de masse molaire inférieure à 1000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Ces dernières compositions d'encollage contiennent néanmoins des composés renfermant de l'azote qui sont susceptibles de se dégrader, notamment en ammoniac, au cours du traitement thermique mis en oeuvre pour que les fibres minérales puissent être liées entre elles et former le produit d'isolation final.

La présente invention a pour but de proposer une composition d'encollage pour des produits isolants à base de laine minérale, notamment de verre ou de roche, qui est exempte de formaldéhyde et de composés azotés.

Pour atteindre ce but, la présente invention propose une composition d'encollage, qui consiste en les composés suivants:

- au moins un sucre réducteur, et
- au moins un sel métallique d'acide inorganique choisi parmi les sels de métal alcalin, de métal alcalino-terreux, de métal de transition ou de métal pauvre d'acide inorganique, ledit sel d'acide inorganique représentant 1 à 30% en poids du poids total du mélange constitué par le sucre réducteur et le sel métallique d'acide inorganique, et
- les additifs ci-après dans les proportions suivantes calculées sur la base de 100 parts en poids de sucre réducteur et de sel métallique d'acide inorganique:

    - 0 à 2 parts de silane,
    - 0 à 20 parts d'huile,
    - 0 à 20 parts de glycérol,
    - 0 à 5 parts d'un silicone,
    - 0 à 30 parts d'un extendeur choisi parmi les charges organiques ou inorganiques solubles ou dispersables dans la composition d'encollage.

Le sucre réducteur conforme à la présente invention est un monosaccharide, un oligosaccharide, un polysaccharide ou un mélange de ces composés.

A titre d'exemple de monosaccharide, on peut citer le glucose, le galactose, le mannose et le fructose.

Par « oligosaccharide » on entend un saccharide renfermant 2 à 10 motifs d'osés, de préférence au plus 5.

A titre d'exemple d'oligosaccharide, on peut citer le lactose, le maltose, l'isomaltose et le cellobiose.

Les polysaccharides conformes à l'invention sont choisis parmi les polysaccharides ayant une masse molaire moyenne en nombre inférieure à 100000, de préférence inférieure à 50000 et avantageusement inférieure à 10000.

A titre d'exemple de polysaccharide préféré, on peut citer les dextrines. Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines selon la présente invention présente un équivalent en dextrose DE (« Dextrose Equivalent » en anglais) supérieur ou égal à 5, de préférence supérieur ou égal à 15.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

De préférence, le sucre réducteur est choisi parmi le glucose, les polysaccharides composés majoritairement (à plus de 50 % en poids) de motifs de glucose et les mélanges de ces composés.

Le sel métallique d'acide inorganique joue le rôle de précurseur d'acide inorganique, lequel acide réagit avec le sucre réducteur sous l'effet de la chaleur pour former un réseau polymérique qui constitue le liant final. Le réseau polymérique ainsi formé permet d'établir des liaisons au niveau des points de jonction des fibres dans la laine minérale.

Comme déjà indiqué, le sel métallique d'acide inorganique est choisi parmi les sels de métal alcalin, de métal alcalino-terreux, de métal de transition ou de métal pauvre d'acide inorganique. De préférence, il s'agit d'un sel de sodium, de magnésium, de fer, de cobalt, de nickel, de cuivre, de zinc ou d'aluminium, avantageusement d'aluminium ou de cuivre.

Le sel métallique d'acide inorganique est avantageusement choisi parmi les sulfates, les chlorures, les nitrates, les phosphates et les carbonates, et mieux encore parmi les sulfates et les chlorures.

On préfère le sulfate d'aluminium, le sulfate de cuivre, le sulfate double d'aluminium et de potassium (ou alun de potassium), le sulfate de fer, le sulfate de zinc et le chlorure d'aluminium, en particulier le sulfate d'aluminium et le sulfate de cuivre.

Dans la composition d'encollage, le sel métallique d'acide inorganique représente 1 à 30 % en poids du poids total du mélange constitué par le sucre réducteur et le sel métallique d'acide inorganique, de préférence 3 à 20 %, et avantageusement 5 à 15 %.

La composition d'encollage conforme à l'invention comprend les additifs conventionnels ci-après dans les proportions suivantes calculées sur la base de 100 parts en poids de sucre réducteur et de sel métallique d'acide inorganique :

- 0 à 2 parts de silane, en particulier un aminosilane,
- 0 à 20 parts d'huile, de préférence 4 à 15 parts,
- 0 à 20 parts de glycérol, de préférence 0 à 10 parts,
- 0 à 5 parts d'un silicone,
- 0 à 30 parts dudit « extendeur ».

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; le glycérol jouent le rôle de plastifiants et permettent d'éviter la prégélification de la composition d'encollage ; le silicone est un agent hydrophobe qui a pour fonction de réduire l'absorption d'eau par le produit d'isolation ; l'« extendeur » est une charge organique ou inorganique, soluble ou dispersable dans la composition d'encollage aqueuse qui permet notamment de diminuer le coût de la composition d'encollage.

La composition d'encollage présente un pH qui varie dans une large mesure selon la nature du sel métallique d'acide inorganique utilisé, en général de 2 à 10, avantageusement acide, notamment inférieur ou égal à 5.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température de l'ordre de 100 à 200°C, généralement à une température comparable à celle d'une résine formophénolique classique, notamment supérieure ou égale à 110°C, de préférence inférieure ou égale à 170°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :

- la température de début de réticulation ($T_R$) et la vitesse de réticulation (V) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe les valeurs correspondant à la température de début de réticulation ($T_R$), en °C, et la pente correspondant à la vitesse de réticulation (V) en MPa/°C.

Figure 1

- la viscosité, exprimée en mPa.s, à l'aide d'un rhéomètre de type rotationnel plan-plan avec un cisaillement de 100 s$^{-1}$, à 25°C. L'échantillon a une teneur en matières solides égale à 30 % en poids.
- l'angle de contact de la composition d'encollage, sur un support en verre.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).

- l'épaisseur initiale du produit d'isolation et l'épaisseur après 1 heure, 24 heures et 30 jours sous compression avec un taux de compression (défini comme étant le rapport de l'épaisseur nominale à l'épaisseur sous compression) égal à 4,8/1. Les mesures d'épaisseur permettent d'évaluer la bonne tenue dimensionnelle du produit.

- le coefficient de conductivité thermique $\lambda$ selon la norme EN 13162, exprimé en W/(m x °K).

## EXEMPLES 1 A 8

On prépare des compositions d'encollage comprenant les constituants figurant dans le tableau 1 exprimé en parts pondérales.

Les compositions d'encollage sont préparées en introduisant successivement, dans un récipient contenant de l'eau, le sucre réducteur, le sel métallique d'acide inorganique sous une agitation vigoureuse jusqu'à dissolution complète des constituants.

En tant que sucre réducteur, on utilise les dextrines suivantes :

- sirop de glucose 74/968® qui a une teneur massique en glucose supérieure à 95 % et présente un équivalent en dextrose DE égal à 99 (commercialisée par ROQUETTE FRERES ; extrait sec : 75 %) ;
- Flolys® B6080S qui a une masse molaire moyenne en poids égale à 1520 et un équivalent en dextrose DE égal à 62 (commercialisée sous la référence par ROQUETTE FRERES ; extrait sec : 81 %).

Les propriétés des compositions d'encollage figurant dans le tableau 1 sont évaluées comparativement à une composition d'encollage classique renfermant une résine formophénolique et de l'urée (Référence) préparée conformément à l'exemple 2, essai 1 de WO 01/96254 A1 et à une composition ne contenant que le sucre réducteur (C1).

Les compositions d'encollage des exemples 1 à 8 présentent une température de début de réticulation ($T_R$) inférieure à celle de la Référence. Ces compositions présentent aussi une vitesse de réticulation (V) proche de celle de la Référence, et même significativement plus élevée (exemples 2 et 3).

Les compositions d'encollage des exemples 1 à 8 possèdent en outre une viscosité faible, inférieure à celle de la Référence à teneur en matières solides identique, ce qui autorise une bonne application sur les fibres minérales, notamment par pulvérisation.

Les compositions d'encollage selon l'invention présentent encore un angle de contact faible sur un support en verre qui dénote une bonne aptitude au mouillage des fibres.

## EXEMPLE 9

Cet exemple illustre la fabrication de produits isolants dans une ligne industrielle.

On prépare une composition d'encollage comprenant les constituants suivants (en parts pondérales) :

| | |
|---|---|
| - sirop de glucose 74/968® | 92,5 |
| - sulfate d'aluminium | 7,5 |
| - $\gamma$-aminopropyltriéthoxsilane | 1,0 |
| - huile minérale | 8,0 |
| - silicone | 1,5 |

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande de 2,4 m de large équipé de caissons d'aspiration internes qui retiennent la laine minérale sous forme d'une nappe à la surface du convoyeur. La nappe passe en continu dans une étuve maintenue à 270°C où les constituants de l'encollage polymérisent pour former un liant. Le produit d'isolation final a une densité égale à 17,5 kg/m³.

Lors de la fabrication du produit d'isolation, les émissions d'azote au niveau de la cheminée sont restées à un niveau minimal.

Le produit d'isolation présente les propriétés suivantes :

**Résistance en traction (gf/g)**

| | |
|---|---|
| avant veillissement | 206 |
| après vieillissement | 150 |
| perte (%) | 27 |

**Epaisseur (mm)**

| | |
|---|---|
| après 1 heure | 83,5 |
| après 24 heures | 81,6 |
| après 30 jours | 79,5 |

| | |
|---|---|
| **Perte au feu (%)** | 6,0 |
| $\lambda$ **(W/(m x °K)** | 0,035 |

Le produit d'isolation est stable en épaisseur et conserve une cohésion mécanique après vieillissement. Ce produit peut être utilisé notamment dans des applications où la sollicitation mécanique est peu importante, par exemple pour l'isolation des combles perdus.

### EXEMPLES 10 A 14

Ces exemples illustrent la fabrication de produits isolants dans une installation industrielle mettant en oeuvre différents sels métalliques d'acides inorganiques.

On procède dans les conditions de l'exemple 9 modifiées en ce que, dans les compositions d'encollage, le sirop de glucose 74/968® et les sels métalliques d'acides inorganiques sont présents dans les proportions indiquées dans le tableau 2 (en parts pondérales).

Les propriétés des produits d'isolation obtenus sont rassemblées dans le tableau 2.

Tableau 1

| Exemple | 1 | 2 | 3 | 4 | 5 | 6 | 7 | 8 | C1 | Référence |
|---|---|---|---|---|---|---|---|---|---|---|
| **Composition d'encollage** | | | | | | | | | | |
| Sucre réducteur | | | | | | | | | | |
|   Sirop de glucose 74/968® | 95 | 90 | - | 92,5 | 85 | 85 | 92,5 | 85 | 100 | - |
|   Flolys® BS6080S | - | - | 85 | - | - | - | - | - | - | - |
| Sel métallique d'acide inorganique | | | | | | | | | | |
|   Sulfate d'aluminium | 5 | 10 | 15 | - | - | - | - | - | - | - |
|   Sulfate de cuivre | - | - | - | 7,5 | 15 | - | - | - | - | - |
|   Alun de potassium | - | - | - | - | - | 15 | - | - | - | - |
|   Chlorure d'aluminium | - | - | - | - | - | - | 7,5 | 15 | - | - |
| **Propriétés** | | | | | | | | | | |
|   Temp. début réticulation $T_R$(°C) | 122 | 115 | 102 | 126 | 119 | 121 | 116 | 110 | 234 | 151 |
|   Vitesse réticulation V (MPa/°C) | 128 | 293 | 345 | 100 | 150 | 163 | 141 | 129 | 16 | 161 |
|   Viscosité à 25°C (mPa.s)[1] | 6,4 | 6,5 | 7,0 | 5,8 | 6,1 | 6,4 | 6,3 | 6,7 | 6,1 | 8,0 |
|   Angle de contact (°)[2] | 28 | 16 | 30 | 32 | 31 | 28 | 32 | 33 | 27 | 10,0 |
|   pH | 2,9 | 2,8 | 2,8 | 3,2 | 3,1 | 2,8 | 2,4 | 2,2 | 3,6 | 6,0 |

[1] solution à 30 % de matières solides
[2] solution à 40 % de matières solides

Tableau 2

| Exemple | 10 | 11 | 12 | 13 | 14 |
|---|---|---|---|---|---|
| **Composition d'encollage** | | | | | |
|   Sirop de glucose 74/968® | 85 | 92,5 | 85 | 85 | 85 |
|   Sulfate d'aluminium | 15 | - | - | - | - |

(suite)

| Exemple | 10 | 11 | 12 | 13 | 14 |
|---|---|---|---|---|---|
| **Composition d'encollage** | | | | | |
| Sulfate de cuivre | - | 7,5 | 15 | - | - |
| Sulfate de fer (II) | - | - | - | 15 | - |
| Sulfate de zinc | - | - | - | - | 15 |
| **Propriétés** | | | | | |
| Résistance en traction (gf/g) | | | | | |
| - avant vieillissement | 192 | 188 | 224 | 144 | 167 |
| - après vieillissement | 168 | 238 | 241 | 159 | 174 |
| - perte | 12,5 % | - 26,5 % | - 7,5 % | - 10,4 % | - 4,1 % |
| Epaisseur (mm) | | | | | |
| - 1 heure | 80,5 | 85,6 | 84,2 | 89,5 | 90,2 |
| - 24 heures | 79,2 | 83,6 | 81,7 | 86,0 | 87,8 |
| - 30 jours | 76,3 | 81,5 | 78,6 | 84,6 | 87,9 |
| Perte au feu (%) | 5,5 | 5,5 | 5,5 | 5,5 | 5,5 |
| $\lambda$ (W/(m x °K) | 0,035 | 0,035 | 0,035 | 0,035 | 0,035 |

## Revendications

**1.** Composition d'encollage pour des produits isolants à base de laine minérale, **caractérisée en ce qu'**elle consiste en les composés suivants :

- de l'eau
- au moins un sucre réducteur, et
- au moins un sel métallique d'acide inorganique choisi parmi les sels de métal alcalin, de métal alcalino-terreux, de métal de transition ou de métal pauvre d'acide inorganique, ledit sel métallique d'acide inorganique représentant 1 à 30 % en poids du poids total du mélange constitué par le sucre réducteur et le sel métallique d'acide inorganique, et
- les additifs ci-après dans les proportions suivantes calculées sur la base de 100 parts en poids de sucre réducteur et de sel métallique d'acide inorganique :

- 0 à 2 parts de silane,
- 0 à 20 parts d'huile,
- 0 à 20 parts de glycérol,
- 0 à 5 parts d'un silicone,
- 0 à 30 parts d'un « extendeur » choisi parmi les charges organiques ou inorganiques solubles ou dispersables dans la composition d'encollage.

**2.** Composition selon la revendication 1, **caractérisée en ce que** le sucre réducteur est un monosaccharide, un oligosaccharide, un polysaccharide ou un mélange de ces composés.

**3.** Composition selon la revendication 2, **caractérisée en ce que** le sucre réducteur est le glucose, le galactose, le mannose, le fructose, le lactose, le maltose, l'isomaltose, le cellobiose ou une dextrine.

**4.** Composition selon l'une des revendications 1 à 3, **caractérisée en ce que** le sucre réducteur est choisi parmi le glucose, les polysaccharides contenant plus de 50 % en poids de motifs de glucose et les mélanges de ces composés.

**5.** Composition selon l'une des revendications 1 à 4, **caractérisée en ce que** le sel métallique d'acide inorganique est un sel de sodium, de magnésium, de fer, de cobalt, de nickel, de cuivre, de zinc ou d'aluminium.

**6.** Composition selon la revendication 5, **caractérisée en ce que** le sel métallique d'acide inorganique est choisi parmi les sulfates, les chlorures, les nitrates, les phosphates et les carbonates.

7.  Composition selon la revendication 5 ou 6, **caractérisée en ce que** le sel métallique d'acide inorganique est le sulfate d'aluminium, le sulfate de cuivre, le sulfate double d'aluminium et de potassium (ou alun de potassium), le sulfate de fer, le sulfate de zinc et le chlorure d'aluminium.

8.  Composition selon l'une des revendications 1 à 7, **caractérisée en ce que** le sel métallique d'acide inorganique représente 3 à 20 % en poids du poids total du mélange constitué par le sucre réducteur et le sel métallique d'acide inorganique.

9.  Composition selon l'une des revendications 1 à 8, **caractérisée en ce que** le silane est un aminosilane.

10. Produit isolant acoustique et/ou thermique à base laine minérale encollée à l'aide de la composition d'encollage selon l'une des revendications 1 à 9.

11. Voile de fibres minérales encollées à l'aide de la composition d'encollage selon l'une des revendications 1 à 9.

12. Procédé de fabrication d'un produit isolant acoustique et/ou thermique à base de laine minérale selon la revendication 10 ou d'un voile de fibres minérales selon la revendication 11, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage a la composition telle que définie dans l'une quelconque des revendications 1 à 9.

## Patentansprüche

1.  Bindemittelzusammensetzung für Dämmstoffprodukte auf Basis von Mineralwolle, **dadurch gekennzeichnet, dass** diese aus den folgenden Komponenten besteht:

    - Wasser,
    - mindestens einem reduzierenden Zucker,
    - mindestens einem Metallsalz einer anorganischen Säure, ausgewählt aus Alkalimetallsalzen, Erdalkalimetallsalzen, Übergangsmetallsalzen oder Post-Übergangsmetallsalzen einer anorganischen Säure, wobei dieses Metallsalz einer anorganischen Säure 1 bis 30 Gew.-% des Gesamtgewichts der aus dem reduzierenden Zucker und dem Metallsalz der anorganischen Säure bestehenden Mischung darstellt, und
    - den nachfolgend genannten Additiven in den folgenden Anteilen, berechnet auf Basis von 100 Gewichtsteilen reduzierender Zucker und Metallsalz einer anorganischen Säure:

        - 0 bis 2 Teile Silan,
        - 0 bis 20 Teile Öl,
        - 0 bis 20 Teile Glycerin,
        - 0 bis 5 Teile eines Silikons,
        - 0 bis 30 Teile eines Streckmittels, ausgewählt aus in der Bindemittelzusammensetzung löslichen oder dispergierbaren, organischen oder anorganischen Füllstoffen.

2.  Zusammensetzung nach Anspruch 1, **dadurch gekennzeichnet, dass** der reduzierende Zucker ein Monosaccharid, ein Oligosaccharid, ein Polysaccharid oder eine Mischung dieser Komponenten ist.

3.  Zusammensetzung nach Anspruch 2, **dadurch gekennzeichnet, dass** der reduzierende Zucker Glukose, Galaktose, Mannose, Fruktose, Laktose, Maltose, Isomaltose, Cellobiose oder ein Dextrin ist.

4.  Zusammensetzung nach einem der Ansprüche 1 bis 3, **dadurch gekennzeichnet, dass** der reduzierende Zucker ausgewählt ist aus Glukose, Polysacchariden, die mehr als 50 Gew.-% Glukosemotive enthalten und Mischungen dieser Komponenten.

5.  Zusammensetzung nach einem der Ansprüche 1 bis 4, **dadurch gekennzeichnet, dass** das Metallsalz einer anorganischen Säure ein Natrium-, Magnesium-, Eisen-, Cobalt-, Nickel-, Kupfer-, Zink- oder Aluminiumsalz ist.

6.  Zusammensetzung nach Anspruch 5, **dadurch gekennzeichnet, dass** das Metallsalz einer anorganischen Säure

# EP 2 488 596 B1

aus Sulfaten, Chloriden, Nitraten, Phosphaten und Carbonaten ausgewählt ist.

7. Zusammensetzung nach Anspruch 5 oder 6, **dadurch gekennzeichnet, dass** das Metallsalz einer anorganischen Säure Aluminiumsulfat, Kupfersulfat, Aluminiumkaliumsulfat (oder Kaliumalaun), Eisensulfat, Zinksulfat und Aluminiumchlorid ist.

8. Zusammensetzung nach einem der Ansprüche 1 bis 7, **dadurch gekennzeichnet, dass** das Metallsalz einer anorganischen Säure 3 bis 20 Gew.-% des Gesamtgewichts der aus dem reduzierenden Zucker und dem Metallsalz der anorganischen Säure bestehenden Mischung darstellt.

9. Zusammensetzung nach einem der Ansprüche 1 bis 8, **dadurch gekennzeichnet, dass** das Silan ein Aminosilan ist.

10. Schall- und/oder wärmedämmendes Produkt auf Basis von Mineralwolle, verleimt mithilfe der Bindemittelzusammensetzung nach einem der Ansprüche 1 bis 9.

11. Mineralfaservlies, verleimt mithilfe der Bindemittelzusammensetzung nach einem der Ansprüche 1 bis 9.

12. Verfahren zur Herstellung eines schall- und/oder wärmedämmenden Produkts auf Basis von Mineralwolle nach Anspruch 10 oder eines Mineralfaservlieses nach Anspruch 11, gemäß dem Mineralwolle oder Mineralfasern hergestellt werden, auf diese Wolle oder diese Fasern eine Bindemittelzusammensetzung aufgetragen wird und diese Wolle oder diese Fasern bei einer Temperatur behandelt werden, die eine Vernetzung des Bindemittels und die Bildung einer nichtschmelzbaren Verbindung erlaubt, **dadurch gekennzeichnet, dass** die Bindemittelzusammensetzung eine Zusammensetzung aufweist, wie sie in einem der Ansprüche 1 bis 9 definiert ist.

## Claims

1. An aqueous sizing composition for insulating products based on mineral wool, **characterized in that** it consists of the following compounds :

  - water
  - at least one reducing sugar, and
  - at least one inorganic acid metal salt chosen from inorganic acid alkali metal, alkaline earth metal, transition metal or poor metal salts, said inorganic acid metal salt representing from 1 to 30% by weight of the total weight of the mixture of the reducing sugar and the inorganic acid metal salt, and
  - the additives below in the following proportions, calculated on the basis of 100 parts by weight of reducing sugar and of inorganic acid metal salt:

    - from 0 to 2 parts of silane,
    - from 0 to 20 parts of oil,
    - from 0 to 20 parts of glycerol,
    - from 0 to 5 parts of a silicone,
    - from 0 to 30 parts of an "extender" selected from organic or mineral fillers soluble or dispersible in the aqueous sizing composition.

2. The composition as claimed in claim 1, **characterized in that** the reducing sugar is a monosaccharide, an oligosaccharide, a polysaccharide or a mixture of these compounds.

3. The composition as claimed in claim 2, **characterized in that** the reducing sugar is glucose, galactose, mannose, fructose, lactose, maltose, isomaltose, cellobiose or a dextrin.

4. The composition as claimed in one of claims 1 to 3, **characterized in that** the reducing sugar is chosen from glucose, polysaccharides comprising more than 50% by weight of glucose units and mixtures of these compounds.

5. The composition as claimed in one of claims 1 to 4, **characterized in that** the inorganic acid metal salt is a sodium, magnesium, iron, cobalt, nickel, copper, zinc or aluminum salt.

6. The composition as claimed in claim 5, **characterized in that** the inorganic acid metal salt is chosen from sulfates, chlorides, nitrates, phosphates and carbonates.

7. The composition as claimed in claim 5 or 6, **characterized in that** the inorganic acid metal salt is aluminum sulfate, copper sulfate, potassium aluminum sulfate (or potassium alum), iron sulfate, zinc sulfate and aluminum chloride.

8. The composition as claimed in one of claims 1 or 7, **characterized in that** the inorganic acid metal salt represents from 3 to 20% by weight of the total weight of the mixture of the reducing sugar and the inorganic acid metal salt.

9. The composition as claimed in one of claims 1 to 8, **characterized in that** the silane is aminosilane,

10. An acoustic and/or thermal insulating product based on mineral wool sized using the sizing composition as claimed in one of claims 1 to 9.

11. A veil of mineral fibers sized using the sizing composition as claimed in one of claims 1 to 9.

12. A process for the manufacture of an acoustic and/or thermal insulating product based on mineral wool as claimed in claim 10 or of a veil of mineral fibers as claimed in claim 11, according to which the mineral wool or the mineral fibers are manufactured, a sizing composition is projected onto said wool or said fibers and said wool or said fibers is/are treated at a temperature which makes possible the crosslinking of the size and the formation of an infusible binder, **characterized in that** the sizing composition is a composition such as defined in any of claims 1 to 9.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 20020188055 A
- US 20040002567 A
- US 20050215153 A

- US 6071994 A
- US 6099773 A
- US 6146746 A
- US 6299936 B
- US 5895804 A
- WO 2009080938 A
- WO 2007014236 A
- WO 2009019232 A
- WO 2009019235 A
- WO 0196254 A1